## Europäisches Patentamt
## European Patent Office
## Office européen des brevets

(19)

(11) Publication number: **0 070 025**
A2

# EUROPEAN PATENT APPLICATION

(12)

(21) Application number: 82106228.8

(22) Date of filing: 12.07.82

(51) Int. Cl.³: **B 60 G 3/26**
B 60 G 7/02

(30) Priority: 14.07.81 JP 108785/81
14.07.81 JP 108786/81
14.07.81 JP 108788/81
17.09.81 JP 145476/81

(43) Date of publication of application:
19.01.83 Bulletin 83/3

(84) Designated Contracting States:
DE FR GB IT

(71) Applicant: NISSAN MOTOR COMPANY, LIMITED
No.2, Takara-cho, Kanagawa-ku
Yokohama City(JP)

(72) Inventor: Shibata, Yasuji
76-3, Mutsukawa 3-chome Minami-ku
Yokohama-shi Kanagawa-ken(JP)

(74) Representative: Patentanwälte TER MEER - MÜLLER -
STEINMEISTER
Triftstrasse 4
D-8000 München 22(DE)

(54) Trailing arm suspension for an automotive vehicle.

(57) A trailing arm suspension which comprises a suspension arm (1) suspended to a suspension member (4) through resiliently deformable members (2). The resilient members (2) are arranged so that at least one of the members has its longitudinal axis tilted with respect to a pivot axis (6) of the suspension arm (1) for vertical displacement thereabout. The tilting angle of the member is selected to make sure that a high rigidity axis (7) of the resilient member which extends normally to the longitudinal axis thereto crosses the high rigidity axis (7') of the other resilient member at a point (Q) behind the pivot axis (6). The crossing point (Q) of the high rigidity axis (7, 7') is located behind the pivot axis (6) of the suspension arm (1) and behind and outside of the traction point (T) of a road wheel (5) so that toe-in change may be caused in the wheel alignment in response to a lateral force applied thereto.

FIG.5

EP 0 070 025 A2

Croydon Printing Company Ltd.

The present invention relates generally to a trailing arm type automotive vehicle suspension for suspending a road wheel onto a vehicle suspension member. More particularly, the invention relates to a trailing arm type suspension with a wheel alignment providing enough cornering force to keep steering characteristics in understeer.

As is well known, in order to obtain driving stability and sufficient traction of the road wheel while the vehicle is driven through a corner or curve road, it is necessary to have enough cornering force in the suspension. For obtaining sufficient cornering force, it is required to keep wheel alignment in weak understeer. On the other hand, in the trailing arm suspension, compliance steer, roll steer and camber change are apt to occur in response to lateral force applied to the road wheel while the vehicle passes the curve or corner. Generally, compliance steer will be caused by deformation in the bushing interpositioned between a suspension arm and the suspension member and roll steer will be caused due to suspension geometry. On the other hand, camber change will be caused by deformation in the bushings.

In the trailing arm type suspension, compliance steer in response to the lateral force applied thereto

while the vehicle is driven in corner or curve road, is apt to cause toe-out change resulting in reducing of cornering force. Similarly in response to the lateral force, camber change is apt to be caused in the positive direction to decrease cornering force.

Conventionally, various approaches for obtaining sufficient cornering force have been made. However, nothing could completely satisfy to provide enough cornering force in the trailing arm vehicle suspension.

Therefore, it is an object of the present invention to provide a trailing arm suspension which is capable of causing toe-in change and/or negative camber in wheel alignment.

In order to accomplish the above-mentioned and other objects, there is provided a trailing arm suspension, according to the present invention, which comprises a suspension arm suspended to a suspension member through resiliently deformable bushings. The bushings are arranged so that at least one of the bushing has its longitudinal axis tilted with respect to a pivot axis of the suspension arm for vertical displacement thereabout. The tilting angle of one of the bushing is adapted to provide a high rigidity axis of the bushing extending normally to the longitudinal axis and crosses the high rigidity axis of another bushing at a point behind the pivot axis.

Preferably, the crossing point of the high rigidity axes of the bushings is to be located behind the pivot axis of the suspension arm and behind and outside of the traction point of a road wheel so that toe-in change may be caused in the wheel alignment in response to the lateral force applied thereto.

Further, it would be preferable to tilt the longitudinal axis of one of the bushing with respect to the pivot axis on the vertical plane to have the high rigidity axis of the bushing crossing with that of the other bushing at a point below the pivot axis to cause negative camber.

The present invention will be understood more fully from the detailed description of the invention given herebelow and from the accompanying drawings of the preferred embodiment of the present invention, which, however, should not be considered as limitative to the present invention but for elucidation and explanation only.

In the drawings:

Fig. 1 is a perspective view showing general construction of a trailing arm suspension;

Fig. 2 is an enlarged sectional view of a bushing assembly in the trailing arm suspension of Fig. 1;

Fig. 3 is an enlarged sectional view similar to Fig. 2 and showing another bushing assembly in the trailing arm suspension of Fig. 1;

Fig. 4 is a plan view of the first embodiment of the trailing suspension according to the present invention;

Fig. 5 is an enlarged perspective view showing relationship of the bushing assembly and a bracket for mounting a suspension arm to a suspension member in the first embodiment of Fig. 4;

Fig. 6 is an explanatory illustration showing relation of the suspension arm, suspension member and bushings, wherein resilient forces of the bushing assemblies are represented by spring;

Fig. 7 is a front elevation of the second embodiment of the trailing arm suspension according to the present invention, in which the bushing assemblies are arranged to cause negative camber in the wheel alignment in response to the lateral force;

Fig. 8 shows compliance steer characteristics of the trailing arm suspension of Fig. 4;

Fig. 9 is a plan view of the third embodiment of the trailing arm suspension according to the present invention;

Fig. 10 is a front elevation of the trailing arm suspension of Fig. 9;

Fig. 11 is a plan view of the fourth embodiment of the trailing arm suspension structure according to the present invention;

Fig. 12 is a front elevation of the trailing arm suspension of Fig. 11;

Fig. 13 is an enlarged perspective view of a bracket used in the fourth embodiment of the trailing arm suspension of Fig. 11;

Fig. 14 is a plan view showing the fifth embodiment of the trailing arm suspension with an assist link according to the present invention;

Fig. 15 is a front elevation of the sixth embodiment of the trailing arm suspension according to the present invention;

Fig. 16 is an explanatory illustration of the modification of the fifth and sixth embodiments in combination;

Fig. 17 is a plan view of the seventh embodiment of the trailing arm suspension of the invention.

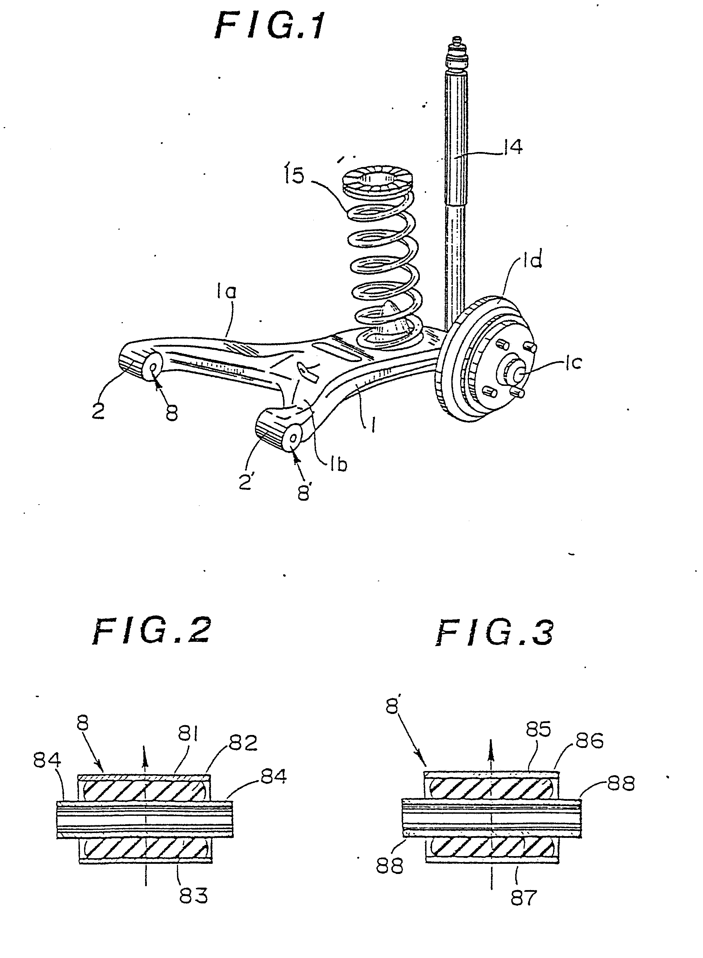

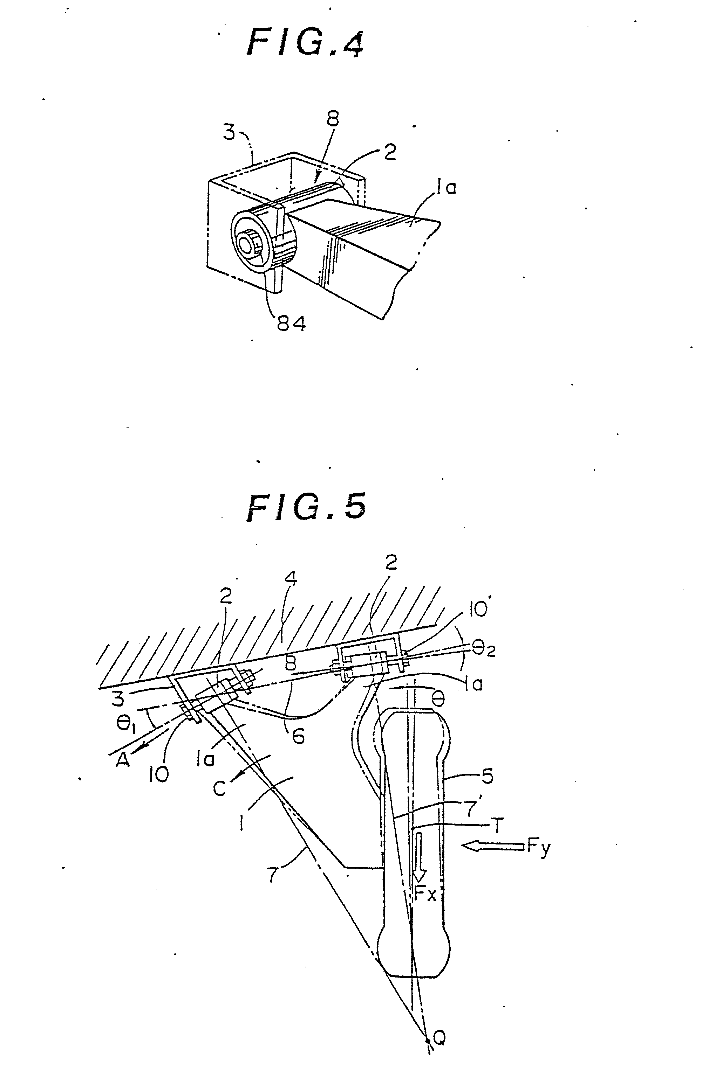

Referring now to the drawings, particularly to Fig. 1, there is illustrated a general construction of a trailing arm type vehicle suspension. A suspension arm 1 has two legs 1a and 1b through which it is pivotably mounted onto a suspension member 4 of a vehicle body as shown in Fig. 5 . The suspension arm 1 further has a wheel axle 1c with a brake mechanism 1d at free end thereof. A shock absorber 14 and a suspension coil spring 15 are interpositioned between the suspension arm 1 and the vehicle body. The shock absorber 14 and the suspension coil spring 15 are cooperative with each other to suspend the suspension arm 1 from the vehicle body and serve for absorbing and damping road shock transmitted to the suspension arm from a road wheel 5.

The legs 1a and 1b of the suspension arm 1 are respectively formed with a cylindrical end 2 and 2' at the ends thereof. Bushing assemblies 8 and 8' are respectively inserted into the cylindrical ends 2 and 2'. The bushing assembly 8 comprises an outer cylinder 81, a cylindrical rubber bushing 82 and an inner cylinder 83 as shown in Fig. 2. The rubber bushing 82 is fixed onto the inner periphery of the outer cylinder 81 at the outer periphery thereof and onto the outer periphery of the inner cylinder 83 at the inner periphery thereof. The inner cylinder 83 has both ends 84 extended in axial direction to outsides of the outer cylinder. The extended ends 84 of the inner cylinder 83 serve to define a clearance between the bushing assembly 8 and a bracket 3 fixed to the suspension member 4. Likewise, the bushing assembly 8' comprises an outer cylinder 85, a cylindrical rubber bushing 86 and an inner cylinder 87 which has extended ends 88, as shown in Fig. 3 .

In the first embodiment, the bushing assemblies 8 and 8' are mounted on the suspension member 4 via the brackets 3 and 3' with bolts 10 and 10', as shown in Fig. 5. The bracket 3 is adapted to mount the bushing assembly 8 at tilted position with respect to the pivot axis 6 at an angle $\theta_1$. On the other hand, the bracket 3' is adapted to mount the bushing assembly 8' with a bolt 10' at tilted position with respect to the pivot axis at an angle $\theta_2$. By this, the high rigidity axes 7 and 7' of the bushing assemblies 8 and 8' cross each other at a point Q. As apparent from Fig. 5 , the point Q is positioned behind of the suspension member and outside of a traction point T.

In the construction of the first embodiment as set forth, the rigidity center for the lateral force Fy is the point Q. Thus, displacement of the rod wheel 5 in response to the lateral force occurs with respect to the point Q. Namely, when the lateral force Fy is applied, deformations of the bushing assemblies 8 and 8' occur along the low rigidity axes thereof. Since, the low rigidity axes of the bushing assemblies 8 and 8' are same as the longitudinal axes thereof, which longitudinal axes are tilted at the angle $\theta_1$ and $\theta_2$ respectively with respect to the pivot axis 6, displacements of the bushing assemblies 8 and 8' with deformation of the rubber bushing 82 and 86 occur in the directions A and B in Fig. 5. The directions A and B to which the bushing assemblies 8 and 8' are displaced are regarded as tangential directions of the high rigidity axes 7 and 7'. In this result, the force causing displacement of the bushing assemblies 8 and 8' act as rotational force for the suspension arm 1 to rotate the suspension arm in a direction C about the point Q at an angle $\theta$ which corresponds to distance of displacement of the bushing assemblies 8 and 8'.

Therefore, as shown by phantom line in Fig. 5 , toe-in change at the angle $\theta$ of the road wheel takes place to increase cornering force.

Furthermore, the suspension constructed hereabove can cause toe-in change in response to backward force Fx to be applied at the traction point T as braking. Namely, when the backward force Fx is applied, displacement or change of wheel alignment of the suspension member 1 occurs with respect to the point Q. As set forth , in the first embodiment, since the point Q is located behind the pivot axis 6 and outside of the traction point T, change of wheel alignment with respect to the vehicle driving direction occurs in toe-in direction in response to the backward force.

This provides improvement for braking stability and keeps the vehicle movement stable during braking.

It should be noted that, by providing the center of the suspension arm rotation behind the pivot axis 6, it is expected to reduce or restrict compliance steer angle at toe-out direction in the road wheel alignment. On the other hand, providing the suspension arm rotational center at outside of the traction point T will lead to toe-in change regardless of the center position located back or forth with respect to the traction point T. Therefore, it is possible to select the tilting angle of the bushing assemblies 8 and 8' to provide the suspension arm rotational center behind the pivot axis 6 but inside of the traction point, or to provide the center in front of the traction point T and outside of the traction point.

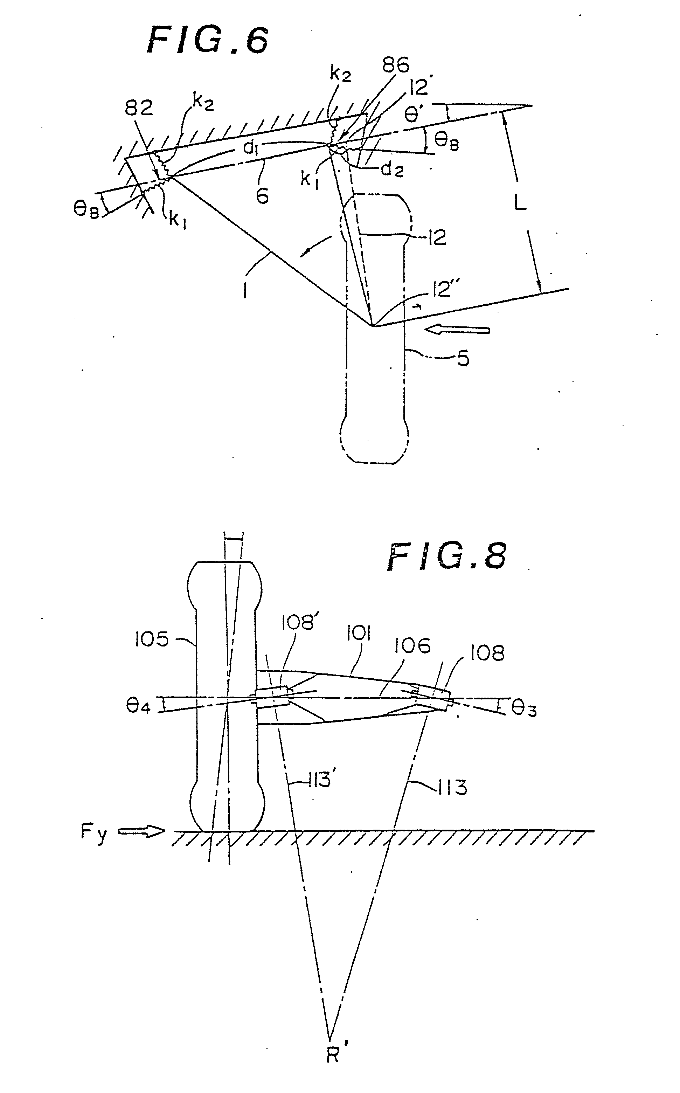

Most preference in selecting the tilting angles of the bushing assemblies 8 and 8' will be explained herebelow with reference to explanatory illustration in Fig. 6. In this figure, the bushing assemblies 8 and 8' are respectively represented by pairs of springs $k_1$ and $k_2$ which are representative of resilient force of the rubber bushings 82 and 86. In the shown embodiment, the rubber bushings 82 and 86 have the same resilient characteristics, in which force in the low rigidity axis is represented by the spring $k_1$ and force in the high rigidity axis is represented by the spring $k_2$. The bushing assemblies 8 and 8' are respectively tilted at an angle $\theta_B$ with respect to the pivot axis 6 for the suspension arm vertical rotation. The pivot axis 6 is tilted at an angle $\theta'$ with respect to lateral plane in relation to the longitudinal vehicle axis. Further, the span between the centers of the bushing assemblies 8 and 8' is assumed at $d_1$ and the distance from the center of the bushing assembly 8' to a point 12' through which a line 12 passes through a bearing point 12" of the road wheel 5 and is tangential to the pivot axis 6, is assumed to be $d_2$. Here, the length of the line between the points 12' and 12." is assumed to be L.

Assuming $d_1 = 400$ mm, $d_2 = 10$ mm, $L = 400$ mm, $k_2/k_1 = 500/20$ kg/mm and $\theta' = 30°$, the relation of the lateral force Fy and the compliance steer angle $\theta$ can be obtained from the equation:

$$\frac{\theta}{Fy} = -0.45 + 0.665 \times \sin(2\theta_B + 63°) - 0.18 \times \cos(2\theta_B) \quad (\text{deg.}/100\text{kg.})$$

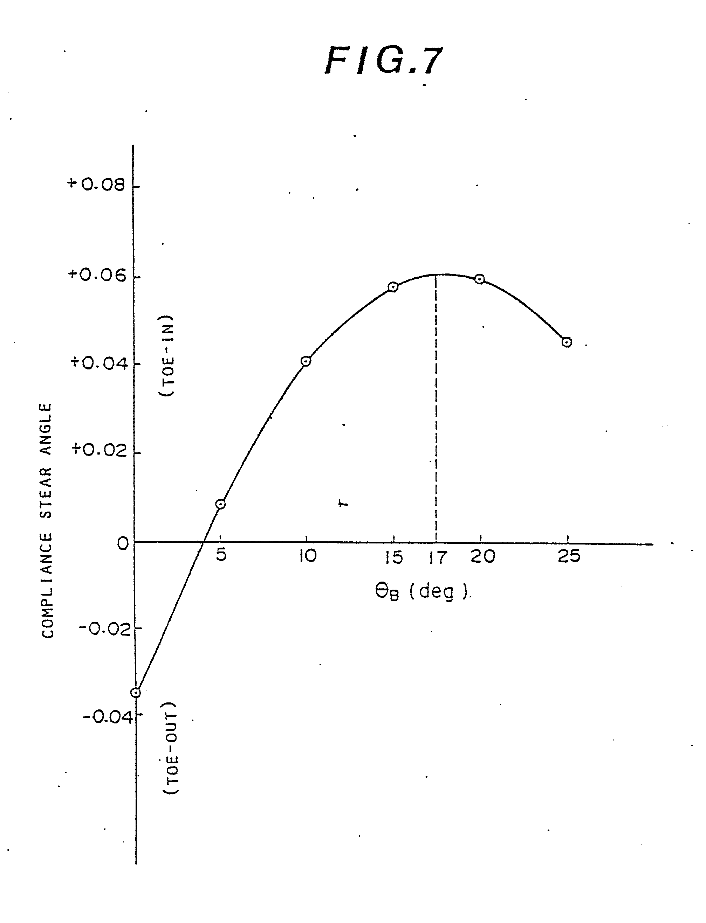

According to the above equation, the compliance steer angle $\delta$ is variable depending on the tilting angle $\Theta_B$ of the bushing assemblies 8 and 8' with respect to pivot axis 6. The relation of the compliance steer angle $\delta$ and the tilting angle $\Theta_B$ is as illustrated in Fig. 7. As seen from Fig. 7, the compliance steer angle $\Theta$ would become maximum at the tilting angle $17^O$ of the bushing assembly. Therefore, in the shown embodiment, the tilting angle $\Theta_B$ of the bushing assemblies 8 and 8' with respect to·the pivot axis 6 is preferred at $17^O$ to obtain maximum compliance steer angle. As apparent herefrom, to obtain compliance steer at maximum toe-in angle, the tilting angles $\Theta_B$ of the bushing assemblies are selected at about $17^O$ with respect to the pivot axis 6.

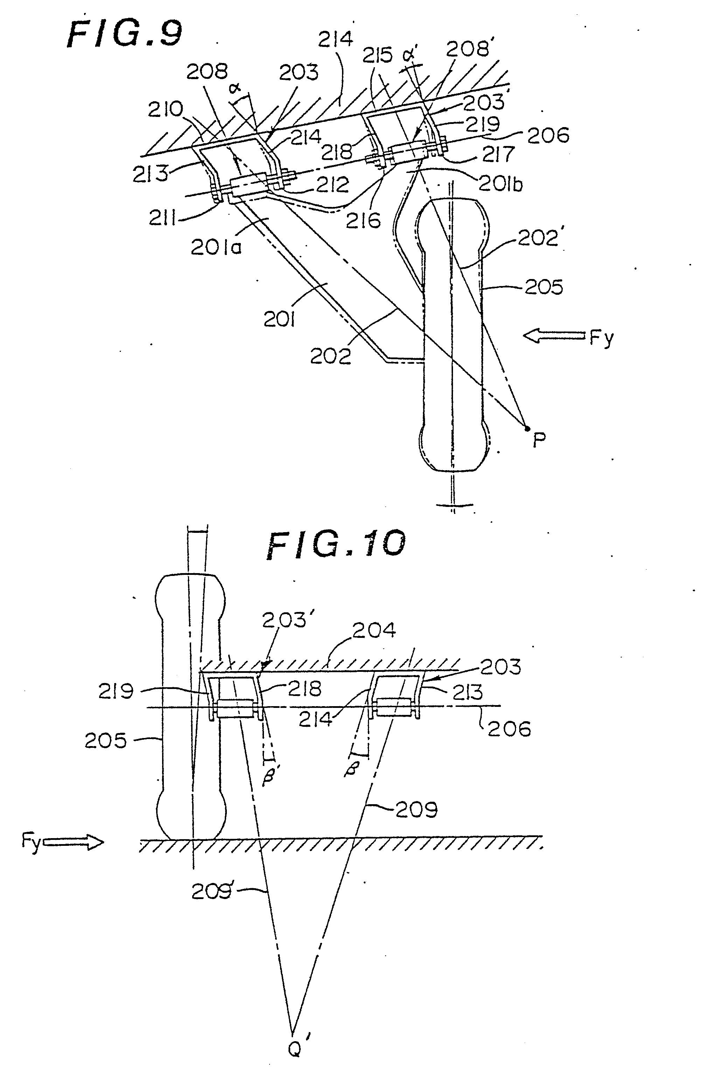

Fig. 8 shows the second embodiment of the trailing arm suspension of the present invention. In this embodiment, it should be noted that the structure of the suspension in plan view is similar to that of the foregoing Fig. 2 and that the bushing assemblies 8, 8' which are in turn referred as 108, 108' are tilted respectively at $\Theta_1$ and $\Theta_2$ with respect to the pivot axis 6 on the horizontal plane. In addition to this, the bushing assemblies in this second embodiment is tilted on the vertical plane with respect to the pivot axis 106. The bushing assembly 108 is tilted at an angle $\Theta_3$ with respect to the pivot axis 106. On the other hand, the bushing assembly 108' is tilted in relation to the pivot axis 106 at an angle $\Theta_4$. By this,high

rigidity axes 113 and 113' of the bushing assemblies in the vertical direction cross at a point R' below the pivot axis 106.

In this construction, when the lateral force Fy is applied, the suspension arm 101 is swayed about the point R' at an amount corresponding the bushing being deformed to cause camber change. This results in decreasing of positive camber to increase stability for cornering force. In the shown embodiment, negative camber can be obtained for further better driving stability particularly for cornering force.

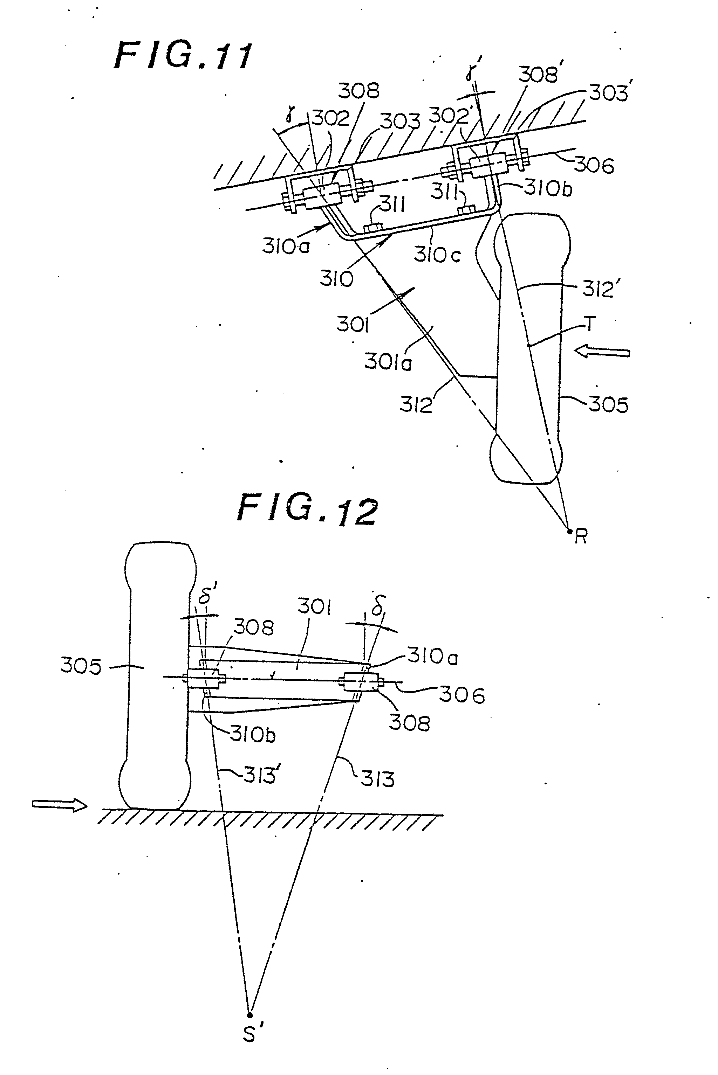

Referring to Figs. 9 and 10, there is illustrated a thirdembodiment of·the trailing arm suspension structure of the present invention. In this third embodiment, the brackets 203 and 203' are modified from that of the foregoing first and second embodiments.

Likewise to the foregoing embodiments, the suspension arm 201 is formed with a pair of legs 201a and 201b on which the bushing assemblies 208 and 208' are provided. The suspension arm 201 is suspended to the suspension member 204 through the bushing assemblies 208 and 208' and the brackets 203 and 203'.

As shown in Fig. 9, the bracket 203 comprises a base section 210 and pair of leg sections 211 and 212. The base section 210 has a plane surface to be fitted onto the suspension member 204. The leg sections 211 and 212 are extended from the base section 210 in parallel relationship

with respect to each other. The leg sections 211 and 212 have a certain flexibility so that they can be deformed in response to the lateral force, and respectively have tilted portions 213 and 214 tilted at an angle $(90° - \alpha)$ with respect to the pivot axis 206. The tilted portions 213 and 214 are adapted to provide the high rigidity axis of the bracket 203 tilting at the angle $(90° - \alpha)$ with respect to the pivot axis 206. On the other hand, the bracket 208' comprises a base section 215 and a pair of leg sections 216 and 217 extending from the base sections. The leg sections 216 and 217 are parallel to each other and respectively have tilted portion 218 and 219 tilting at an angle $(90° - \alpha')$ with respect to the pivot axis 206. The tilted portions 218 and 219 are adapted to provide the high rigidity axis for the bracket 203' tilting at the angle $(90° - \alpha')$ with respect to the pivot axis 206. The tilting angles $\alpha$ and $\alpha'$ are selected such that the high rigidity axes 202 and 202' of the brackets 203 and 203' cross at a point P positioned at least behind the pivot axis 206. Preferably, the point P is positioned behind and outside of the traction point T of the road wheel 205.

Likewise, the tilted portions 213 and 214 of the bracket 203 is angled at an angle β with respect to vertical so that the high rigidity axis 209 of the bracket 203 extending in vertical direction is angled with respect to vertical axis at the angle β. On the other hand, the tilted portion 218 and 219 are respectively angled at an angle β' with respect to the vertical axis so that the high rigidity axis 209' of the bracket 203' in vertical direction is angled at the angle β'. The tilting angles β and β' are selected so that the high rigidity axes 209 and 209' cross at a point $Q'$ below the pivot axis 206.

When the lateral force Fy is applied to the road wheel, the compliance steer occurs about the point P with deformation of the leg sections 211, 212, 216 and 217 of the brackets 208 and 208', as shown in Fig. 9. In this construction, since the point P as a cross point of horizontal high rigidity axes of the brackets 203 and 203' is located backward to the pivot axis 206, and outside and backward of the traction point of the road wheel 205, toe-out angle is reduced. In the shown embodiment, in response to the lateral force, the road wheel causes toe-in change rather than toe-out change. This results in increasing of reacting force against the lateral force to make the vehicle stable while passing through a curve road. Further, since the point $Q'$ as a cross point of vertical high rigidity axes 209 and 209' of the brackets 203 and 203' is located below the pivot axis 206, compliance steer will be caused about the point $Q'$. This leads to reducing camber change angle in positive direction and, in the shown embodiment, rather negative camber is caused in response to the lateral force Fy.

Furthermore, in response to braking force, a moment for reducing toe-out change is created by locating the center P of compliance steer at outside of the traction point of the road wheel. If the braking force is large enough, it results in toe-in change of the road wheel 205.

Referring to Figs. 11 and 12 show the fourth embodiment of the trailing arm suspension structure according to the present invention. In this embodiment, the bushings 308 and 308' are mounted on the brackets 303 and 303' in parallel relationship to the pivot axis 306. On the other hand, the suspension arm 301 comprises a body 301a and a substantially channel shaped resilient member 310. The resilient member 310 has a pair of legs 310a and 310b laterally extended from the major section 310c where is fixed to the suspension member 301 with bolts 311 and which legs 310a and 310b are deformable in response to the lateral force. The resilient member 310 has cylindrical ends 302 and 302' at the ends of the legs 310a and 310b. Each cylindrical end 302 and 302' receives therein the bushing assembly 308 and 308'.

As shown in Fig. 11, the leg 310a is tilted with respect to an axis normal to the pivot axis 306 at an angle $\gamma$ so that the high rigidity axis 312 of thereof is tilted at the angle $\gamma$ with respect to that axis. Likewise, the leg 310b is tilted with respect to an axis normal to the pivot axis 306 at an angle $\gamma'$ so that the high rigidity axis 312' is tilted at the angle $\gamma'$ to that axis. The tilting angles $\gamma$ and $\gamma'$ are selected to so that the high rigidity axes 312 and 312' cross at a point R located backward of the pivot axis 306 and outside of the traction point T of the road wheel 305. By this, similarly to the foregoing embodiment, the road wheel 305 causes toe-in change in response to lateral force applied thereto.

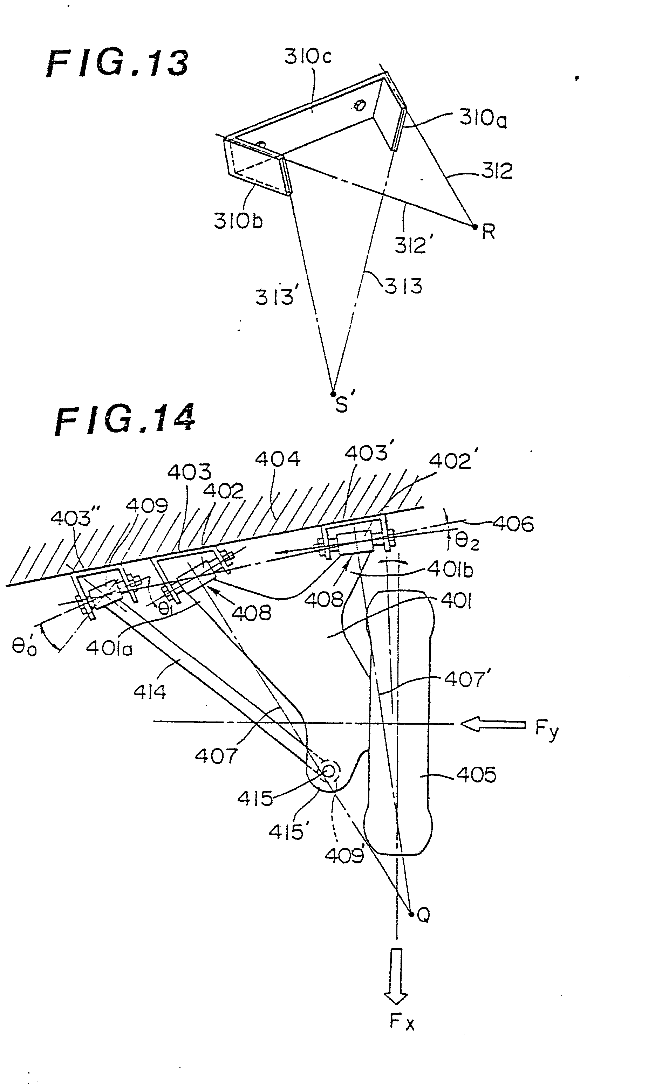

Likewise, the leg 310a is tilted with respect to a vertical axis vertial to the pivot axis 306 at an angle δ so that the high rigidity axis 313 is tilted at the angle δ with respect to the vertical axis as shown in Figs. 12 and 13. Also, the leg 310b is tilted at an angle δ' with respect to the vertical axis vertical to the pivot axis 306 so that the high rigidity axis 313' is tilted at the angle δ'. The tilting angles δ and δ' are selected such that the high rigidity axes 313 and 313' cross at a point S' below the pivot axis. Also similarly to the foregoing embodiments, the road wheel causes negative camber in response to the lateral force.

Thus, by the shown fourth embodiment, cornering force of the vehicle is also increased.

Fig. 14 shows the fifth embodiment of the trailing arm suspension structure according to the present invention, which is provided with an assist link 414. The assist link 414 is interpositioned between a bracket 403" fixed to the suspension member 404 and a portion 415' of the suspension arm 401 with a pivot 415. The assist link 414 has cylindrical portions at both ends to receive therewith bushing assemblies 409 and 409'.

As seen from Fig. 14, the suspension arm 401 has

legs 401a and 401b with cylindrical ends 402 and 402'. The leg 401a is engaged with the bracket 403 through the bushing assembly 408 at tilted position tilting at an angle $\theta_1$ with respect to the pivot axis 406. Likewise, the leg 401b is engaged with the bracket 403' through the bushing assembly 408' at tilting angle $\theta_2$ with respect to the pivot axis 406. By this, the high rigidity axes 407 and 407' of the bushing assemblies 408 and 408' are tilted with respect to axes normal to the pivot axis 406 so that they cross each other at a point Q backward to the pivot axis 406 and backward and outside of the traction point of the road wheel.

The bushing assembly 409 has its longitudinal axis offset at an angle $\theta_0'$ with respect to an axis normal to the longitudinal axis of the assist link 414. The tilting angle $\theta_0'$ is arranged smaller than that of the usual tilting angle of such type suspension. This leads the road wheel causing toe-in change in cooperation of the bushing assembly alignment to have the center Q of toe change due to compliance steer.

Likewise to the foregoing embodiments, the suspensing arm 401 is moved about the toe-change center Q in response to the lateral force Fy so that toe-in change is caused for the road wheel 405 at the angle $-\theta$ as shown in Fig. 14. As set forth, in order to cause toe-in change in the road wheel, the assist link 414 cooperates with the alignment of the bushing assemblies. On the other hand,

the assist link 414 serves for causing reducing of toe out angle in response to reaction force applied to the road wheel 405 as braking force Fx is applied, as set forth. According to the reaction force being increased, the toe-out angle is reduced by the function of the assist link 414 which finally cause toe-in change on the road wheel 405.

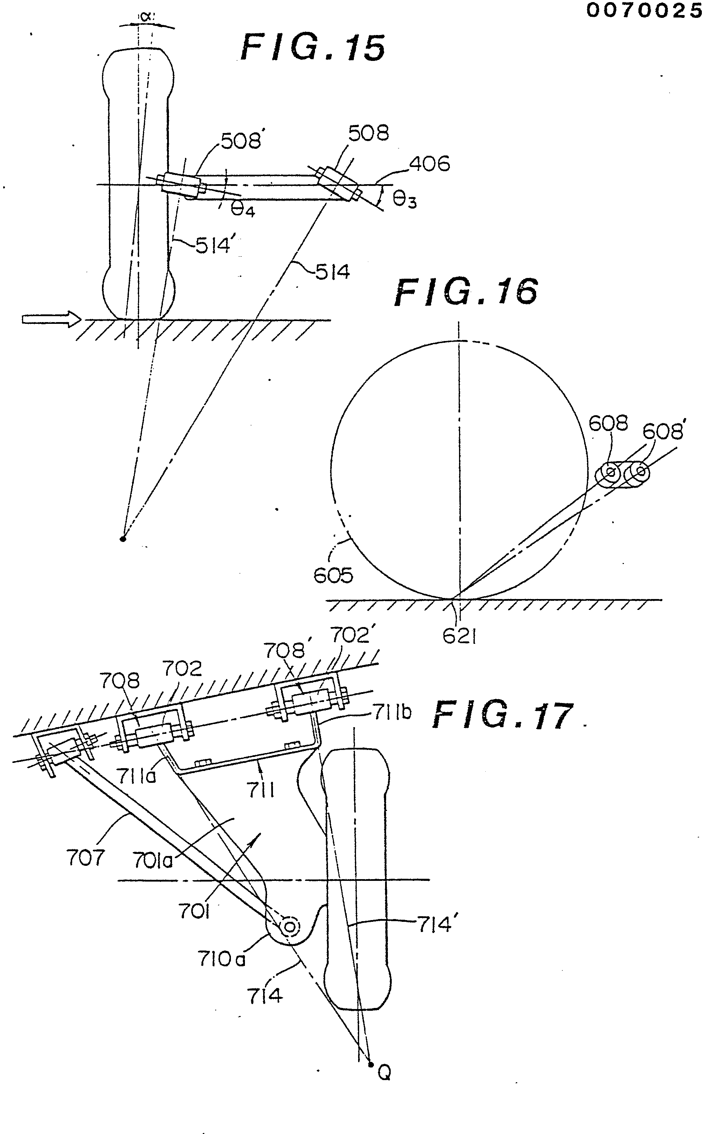

Fig. 15 shows the sixth embodiment of the trailing arm suspension according to the present invention. In this embodiment, the bushing assemblies 508 and 508' are aligned on the pivot axis 506 on the horizontal plane and are respectively tilted at angles $\Theta_3$ and $\Theta_4$ with respect to the pivot axis 506 on the vertical plane. The high rigidity axis 514 of the bushing assembly 508 is tilted with respect to an axis tangential to the pivot axis to across with the high rigidity axis 514' of the bushing assembly 508'. By this, negative camber at an angle $\alpha$ in response to the lateral force can be obtained.

As shown in Fig. 16, it would be possible to have the high rigidity axes of the bushing assemblies 608 and 608' to meet at the point 621 which is traction point of the road wheel 605. By this, the supporting rigidity of the bushing assemblied directed to the same direction to which the lateral force is applied to prevent the vehicle from rolling. At this time, camber change will not be caused on the road wheel 605 even when the lateral force is applied.

Fig. 17 shows the seventh embodiment of the

trailing arm suspension as modification of the foregoing fourth embodiment. In this seventh embodiment, the suspension arm 701 comprises a body 701a and a resilient member 711 having legs 711a and 711b with cylindrical ends 702 and 702'. The bushing assemblies 708 and 708' are received in the cylindrical ends 702 and 702' of the legs 711a and 711b. Likewise to the foregoing fourth embodiment, the legs 711a and 711b are tilted with respect to the axes normal to the pivot axis 706 to have high rigidity axes 714 and 714' crossing at the point Q positioned behind the pivot axis 706 and outside of the traction point of the road wheel. Further, the assist link 707 is also provided between the suspension member 704 and the portion 710a of the suspension arm 701. The end of the assist arm 707 is engaged to the suspension member 704 through the bracket 718 and bushing assemblies 713'.

Similarly to the foregoing embodiment, toe-in change will be caused in the road wheel to increase the cornering force in response to the lateral force and, likewise, toe-in change will be caused in response to braking force by the function of the assist link 707.

## CLAIMS

1. A trailing arm suspension for suspending a road wheel from a vehicle body, comprising a suspension member in a vehicle body, a suspension arm having rotatably mounted thereon a road wheel and connected to said suspension member to be vertically pivotable about a pivot axis, and at least two resilient members interpositioned between said suspension member and said suspension arm, said resilient members being deformable in response to a force applied thereto, c h a r a c - t e r i z e d in that said resilient members (82,86; 203,203';403,403';310a,310b;711a,711b) have high rigidity axes (7,7';202,202';312,312';407,407';714,714') to resist against the force applied to the road wheel, which high rigidity axes of said resilient members cross each other at a position (Q;P;R) behind said pivot axis (6;206;306;406) and a traction point (T) of said road wheel (5;205;305;405) to define a center of change of wheel alignment in a direction increasing a cornering force.

2. Suspension as set forth in claim 1, c h a r a c - t e r i z e d in that at least one of said resilient members (82,86;...) includes means for offsetting the high rigidity axis with respect to an axis normal to said pivot axis (6;...) so that the high rigidity axes (7,7';...) are concentrated at a point (Q;...) behind said pivot axis (6;...) for causing toe-in change in the wheel alignment in response to a lateral force applied to the road wheel (5;...) in an inward direction with respect to the vehicle body.

3. Suspension as set forth in claim 1 or 2, c h a - r a c t e r i z e d in that said high rigidity axes (7,7';202,202';312,312';407,407';714,714') and said axes normal to said pivot axis (6;...) extend in a substantially horizontal plane and that said resilient members (82,86;...) have second high rigidity axes (113,113';209,209';313,313';514,514') which are inclined with respect to a vertical axis by a predetermined angle so as to cross each other at a point (R';Q';S') below said pivot axis (6;...), whereby wheel alignment causes toe-in change and negative camber in response to a lateral force applied to the road wheel in an inward direction with respect to the vehicle body.

4. Suspension as set forth in anyone of claims 1 to 3, c h a r a c t e r i z e d   in that said resilient member is a rubber bushing (82) having a longitudinal axis offset with respect to said pivot axis (6).

5. Suspension as set forth in claim 4,   c h a r a c - t e r i z e d   in that said high rigidity axis (7) of said rubber bushing (82) extends in radial direction and normally to said longitudinal axis thereof.

6. Suspension as set forth in claim 5,   c h a r a c - t e r i z e d   by an assist link (414;707) positioned over said suspension member (404) and said suspension arm (401;701).

7. Suspension as set forth in any of the claims 1 to 3, c h a r a c t e r i z e d   in that said resilient member is a bracket (203;403) secured to said suspension member (204;404) and pivotably engaged with said suspension arm (201;401), said bracket (203;403) being resiliently deformable in response to said lateral force.

8. Suspension as set forth in any of the claims 1 to 3, c h a r a c t e r i z e d   in said resilient member is a resilient connecting arm (310a;711a) extending from said suspension arm (301;701) so that it deforms in response to said lateral force.

## FIG.1

## FIG.2

## FIG.3

# FIG.4

# FIG.5

FIG.4

FIG.5

## FIG.6

## FIG.8

# FIG.7

FIG.9

FIG.10

0070025

## FIG.11

## FIG.12

*FIG.13*

*FIG.14*

# FIG.15

α

508'  508  406

θ₄  θ₃

514'

514

# FIG.16

608  608'

605

621

# FIG.17.

708'  702'

708  702  711b

711a

711

707  701a

701

714'

710a

714

Q